# EUROPEAN PATENT SPECIFICATION

(11) **EP 2 667 362 B1**
(45) Date of publication and mention of the grant of the patent: **30.08.2017**
(21) Application number: 12305567.5
(22) Date of filing: 23.05.2012
(51) Int. Cl.: G08C 17/02

(54) **CONTROL DEVICE**
STEUERVORRICHTUNG
DISPOSITIF DE CONTRÔLE

(43) Date of publication of application: 27.11.2013
(73) Proprietor: ALCATEL LUCENT, 92100 Boulogne-Billancourt (FR)
(72) Inventor: Beauvais, Mathieu, 91620 Nozay (FR); Pastor, Alain, 91620 Nozay (FR)
(74) Representative: Berthier, Karine

(56) References cited:
- EP-A1- 1 959 650
- WO-A2-02/01795
- US-A1- 2009 112 602

## Description

### FIELD OF THE INVENTION

An aspect of the invention relates to a control device that is adapted to provide a physical control signal for a controllable object in dependence on distant control data. The control device may be used to control, for example, a domestic apparatus at a distance via a communication network. Other aspects of the invention relate to a method of operating a control device, and a device readable medium comprising a set of instructions.

A similar document is e.g. US 2009/112602 A1.

### BACKGROUND OF THE INVENTION

A controllable object can have so-called virtual extensions that allow use of the controllable object at a distance by people, applications, or other objects. These virtual extensions can provide new kinds of services. A virtual extension typically involves a control device that can establish a communication link with a distant controller. The control device is physically associated with the controllable object. The control device provides a physical control signal for the controllable object in response to control data received from a distant controller.

A control at a distance raises questions concerning the degree of control that a distant user may have over the controllable object, whether the user is a person, an application, or another object. Such a question can be addressed by priority setting. For example, one user may have priority over another user. To that end, it is possible to define different types of users and different user profiles.

### SUMMARY OF THE INVENTION

There is a need for a solution that allows more comprehensive management of distant control of a device.

In order to better address this need, the following points have been taken into consideration. In numerous applications, it is possible to alter a behavior of an object by physically accessing the object. For example, replacing a 25 Watts light bulb in a lamp by a 10 Watts light bulb will prevent a user from causing the lamp to produce more than 10 Watts illumination power. This control constraint applies to any user, whatever his or her priority is. Only a user who has physical access to the object may alter or remove the control constraint by, for example, replacing one light bulb by another one. However, imposing physical control constraints by physically accessing an object is rather cumbersome and inconvenient.

In accordance with an aspect of the invention, a control device comprises:
- a local control interface adapted to receive local control data from a local controller upon establishment of a physical contact between the control device and the local controller;
- a distant control interface adapted to receive distant control data from a distant controller upon establishment of a communication link between the control device and the distant controller;
- a control arrangement adapted to define, on the basis of local control data, a transformation of distant control data into a physical control signal for a controllable object.

Another aspect of the invention concerns a method of controlling a controllable object by means of a control device, the method comprising:
- a local control data reception step in which the control device receives local control data from a local controller upon establishment of a physical contact between the control device and the local controller;
- a distant control data reception step in which the control device receives distant control data from a distant controller upon establishment of a communication link between the control device and the distant controller;
- a control definition step in which the control device defines, on the basis of local control data, a transformation of distant control data into a physical control signal for a controllable object; and
   a control execution step in which the control device applies the transformation to distant control data that has been received so as to generate the physical control signal.

Yet another aspect of the invention concerns a device readable medium comprising a set of instructions that enables a device, which is capable of executing the set of instructions, to carry out the method according as defined hereinbefore.

In each of these aspects, a local user who has physically access to the control device can impose restrictions on control actions that a distant user may carry out with respect to the controllable object. The local user imposes such restrictions by establishing a physical contact between the local controller and the control device. More precisely, a physical contact allows local control data, which may define control restrictions, to be applied to the control device. This allows more comprehensive management of distant control of a device, in a way that is easily manageable and convenient.

An embodiment of the invention advantageously comprises one or more of the following additional features, which are described in separate paragraphs. These additional features each contribute to more comprehensive management of distant control of a device.

The control arrangement advantageously comprises:
- a controller module adapted to provide input control data to a behavioral model of the controllable object on the basis of the distant control data;
- a model module adapted to implement the behavioral model of the controllable object, which provides state descriptive data relating to the controllable object as a response to the input control data; and
- a physical control interface adapted to transform the state descriptive data from the behavioral model into the physical control signal for the controllable object.

The physical control interface may advantageously define, on the basis of local control data, a transformation of the state descriptive data into the physical control signal for the controllable object.

The controller module may advantageously define, on the basis of local control data, a transformation of the distant control data into the input control data for the behavioral model.

The controller module advantageously verifies whether the distant control data is valid, or not.

The controller module advantageously modifies the distant control data in case the distant control data is not valid, so as to obtain modified distant control data that is valid, and is further adapted to provide the input control data for the behavioral model on the basis of the modified distant control data.

The controller module is adapted to provide, on the basis of the state descriptive data, view data describing a physical output of the controllable object, the distant control interface being adapted to transmit the view data to the distant controller.

The control arrangement may advantageously use local control data for imposing a range restriction on the physical control signal.

The control arrangement may advantageously use local control data for modifying a rule according to which the physical control signal varies with the distant control data.

The control arrangement may advantageously use local control data for disabling a component of the physical control signal.

The distant control interface may advantageously communicate with the distant controller over a communication network.

For the purpose of illustration of the invention summarized hereinbefore, as well as the additional features, a detailed description of particular embodiments is provided with reference to drawings.

### BRIEF DESCRIPTION OF THE DRAWINGS

FIG. 1 is a block diagram that illustrates an infrastructure, which includes a control device, for controlling a controllable object.
FIG. 2 is a flow chart diagram that illustrates a method of controlling the controllable object by means of the control device.
FIG. 3 is a flow chart diagram that illustrates a method of controlling the control device.

### DETAILED DESCRIPTION

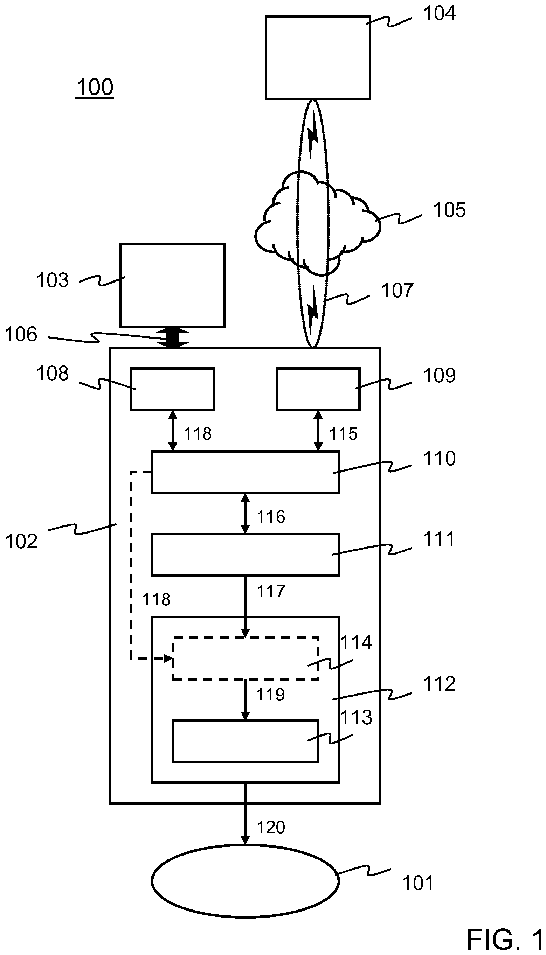

FIG. 1 is a block diagram that schematically illustrates an infrastructure 100 for controlling a controllable object 101. The infrastructure 100 comprises a control device 102, a local controller 103, a distant controller 104, and a communication network 105. The controllable object 101 may be in the form of, for example, a domestic apparatus, such as a lamp. The control device 102 may be incorporated in a unit, which also includes the domestic apparatus. The local controller 103 may be in the form of, for example, an apparatus that comprises a user interface, which may include a keyboard and a display screen. The distant controller 104 may be in the form of, for example, a communication terminal that has been programmed to provide control functions for the controllable object 101. This may be achieved by, for example, loading appropriate application software into the communication terminal. The communication network 105 may be in the form of, for example, the Internet, or a data network, such as networks known under the acronyms of GPRS, 3G, or EDGE.

The local controller 103 may establish a physical contact 106 with the control device 102. This physical contact 106 may be established by means of, for example, one or more electrical connectors, or a cable, or both. The distant controller 104 may establish a communication link 107 with the control device 102 by means of the communication network 105.

In more detail, the control device 102 comprises a local control interface 108, a distant control interface 109, a controller module 110, a model module 111, and a physical control interface 112. The physical control interface 112 comprises a converter 113 and may optionally comprise a transformation module 114. The control device 102 may comprise one or more processors capable of executing instructions. The aforementioned modules may then each be implemented by means of, for example, a set of instructions that has been loaded into such a processor. In such a software-based implementation, the set of instructions defines operations that the module concerned carries out, which will be described hereinafter. The local control interface 108 and the distant control interface 109 may also be implemented in such a way, at least partially.

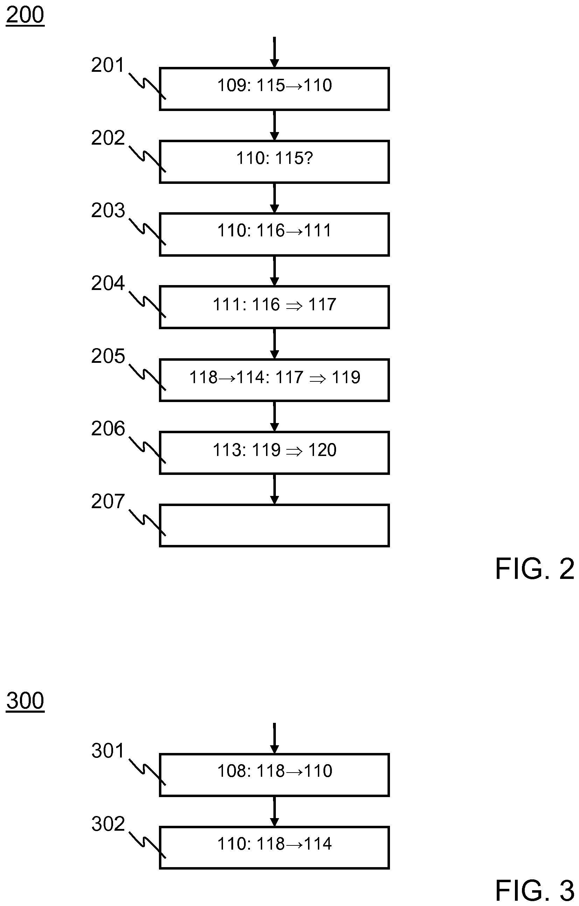

FIG. 2 illustrates a method of controlling the controllable object 101 by means of the control device 102. The method comprises a series of steps, which various modules in the control device 102 carry out. FIG. 2 may be regarded as a flowchart representation of a software program that enables the control device 102 to carry out various operations described hereinafter. This software program may comprise one or more sets of instructions, each implementing a particular module of the control device 102 illustrated in FIG. 1. In the method illustrated in FIG. 2, it is assumed that the physical control interface 112 comprises the transformation module 114 mentioned hereinbefore.

In a distant control data reception step 201, the distant control interface 109 receives distant control data 115 from the distant controller 104 upon establishment of a communication link 107 between the control device 102 and the distant controller 104. Let it be assumed that the controllable object 101 is a lamp as mentioned hereinbefore. In that case, the distant control data 115 may define, for example, an illumination power, an illumination color, or an illumination direction, or any combination of these parameters. The distant control interface 109 applies the distant control data 115 that has been received to the controller module 110.

In a verification step 202, the controller module 110 verifies whether the distant control data 115 is valid, or not. For example, the controller module 110 may verify whether the distant control data 115 comprises a correct parameter type, or not, and whether a parameter is within a valid range, or not. In case the distant control data 115 is not valid, the controller module 110 may modify the distant control data 115 that has been received so as to obtain modified distant control data that is valid. Alternatively, the controller module 110 may reject the distant control data 115 and cause transmission of a message to the distant controller 104 concerning this rejection.

In an input control data application step 203, the controller module 110 applies input control data 116 to the model module 111 on the basis of the distant control data 115 that has been received. The input control data 116 may be equivalent to the distant control data 115 in case the verification step 201 was positive. If not, the input control data 116 may be a modified version of the distant control data 115.

In a modeling step 204, the model module 111, which implements a behavioral model of the controllable object 101, provides state descriptive data 117 relating to the controllable object 101 as a response to the input control data 116. The input control data 116 may trigger a state modification of the behavioral model. This state modification reflects a state modification of the controllable object 101 and, as a result, a modification of a physical output that the controllable object 101 provides. In case the controllable object 101 is a lamp, the state modification may concern, for example, the illumination power, the illumination color, or the illumination direction, or any combination of these parameters, which concern the physical output that the lamp provides. The model module 111 applies the state descriptive data 117 to the transformation module 114.

In a model output transformation step 205, the transformation module 114 may modify the state descriptive data 117 on the basis on the basis local control data 118. For example, the local control data 118 may impose a range restriction on the physical output that the controllable object 101 provides. As another example, the local control data 118 may disable a component of the physical control signal. As yet another example, the local control data 118 may modify a rule according to which the physical control signal varies with the distant control data 115. This will be explained in greater detail hereinafter by means of examples. The transformation module 114 applies effective state descriptive data 119 to the converter 113. The effective state descriptive data 119 may correspond with the state descriptive data 117 that the model module 111 provides, or may be a modified version of that data.

In a physical control step 206, the converter 113 converts the effective state descriptive data 119 into a physical control signal 120 for the controllable object 101. This conversion may comprise, for example, a digital-to-analog conversion. The controllable object 101 will produce a physical output that corresponds with the physical control signal 120.

In a view provision step 207, the controller module 110 may provide view data describing the physical output that the controllable object 101 provides. The distant control interface 109 may transmit the view data to the distant controller 104. The view data then constitutes a feedback for a distant user who has transmitted the distant control data 115 to the control device 102 by means of the distant controller 104.

In this example, the controller module 110 provides the view data on the basis of the state descriptive data 117, rather than the effective state descriptive data 119. The view data will be consistent with the distant control data 115 that the distant user has transmitted to the control device 102 by means of the distant controller 104. However, the view data will not reflect a modification that is applied in the model output transformation step 205. The distant user will thus be unaware of this modification. This unawareness can preserve privacy of a local user who has physical control over the controllable object 101 by providing the local control data 118, as will be explained in greater detail hereinafter.

The following example illustrates the method described hereinbefore with reference to FIG. 2. The controllable object 101 is assumed to be a lamp. The distant control data 115 is assumed to be a command "set the illumination color to blue". The distant control data 115 is assumed to be valid. Accordingly, the behavioral model of the lamp will provide state descriptive data 117 specifying that the illumination color is blue. It is assumed that the local control data 118 defines that a red color component should be added to a color definition comprised in the distant control data 115. The transformation module 114 adds the red color component to the state descriptive data 117, which specifies that the illumination color is blue. Accordingly, the transformation module 114 provides effective state descriptive data 119, which specifies that the illumination color is violet. The physical control signal 120 will cause the lamp to produce violet light, which is the physical output. However, the view data will indicate that the lamp produces blue light, as specified by the distant control data 115.

An alternative method can be applied in case the physical control interface 112 of the control device 102 comprises the converter 113 only, which means that the transformation module 114 is omitted. The alternative method is obtained by adapting the method illustrated in FIG. 2 in the following way. The model output transformation step 205 is omitted, and the input control data 116 application step is replaced by a module input transformation step. In the model input transformation step, the controller module 110 may modify the distant control data 115 on the basis on the basis local control data 118. As in the model output transformation step 205 described hereinbefore, the local control data 118 may impose a range restriction on the physical output that the controllable object 101 provides, the local control data 118 may disable a component of the physical control signal 120, or the local control data 118 may modify a rule according to which the physical control signal 120 varies with the distant control data 115. The input control data 116 that the model module 111 receives may thus be a modified version of the distant control data 115, whereby the local control data 118 defines a modification that is applied.

In the alternative method, a control modification on the basis of local control data 118 is carried out before the model module 111, which implements the behavioral model of the controllable object 101. In contrast, in the method illustrated in FIG. 2, a control modification on the basis of local control data 118 is carried out after the model module 111. In the alternative method, the state descriptive data 117 that the model module 111 provides will precisely reflect the physical output that the controllable object 101 provides. Consequently, the view data will also precisely reflect this physical output. A distant user can see what happens in reality. The distant user can thus be aware of a control modification that is carried out within the control device 102, such as, for example, adding a red color component to a color definition comprised in the distant control data 115.

FIG. 3 illustrates a method of controlling the control device 102. Like FIG. 2, FIG. 3 may be regarded as a flowchart representation of a software program that enables the control device 102 to carry out various operations described hereinafter. This software program may comprise one or more sets of instructions, each implementing a particular module of the control device 102 illustrated in FIG. 1. In the method illustrated in FIG. 3, it is assumed that the physical control interface 112 comprises the transformation module 114 mentioned hereinbefore.

In a local control data reception step 301, the local control interface 108 receives local control data 118 from the local controller 103 upon establishment of a physical contact 106 between the control device 102 and the local controller 103. This physical contact 106 may be established by means of, for example, one or more electrical connectors, or a cable, or both. The local control interface 108 applies the local control data 118 that is received to the controller module 110.

In a transformation definition step 302, the controller module 110 configures the transformation module 114 on the basis of the local control data 118. More precisely, the controller module 110 configures the transformation module 114 to modify the state descriptive data 117 that the model module 111 provides. The local control data 118 defines this modification, which may involve, for example, a range restriction, disabling a component of the physical control signal 120, or modifying a rule according to which the physical control signal 120 varies with the distant control data 115.

An alternative method can be applied in case the physical control interface 112 of the control device 102 comprises the converter 113 only, which means that the transformation module 114 is omitted. The alternative method is obtained by adapting the method illustrated in FIG. 3 in the following way. In the transformation definition step 302, the controller module 110 configures a modification of the distant control data 115 that is carried out within the controller module 110 itself, so as to obtain input control data 116 for the behavioral model. The local control data 118 defines this modification.

In either method, a local user who has physically access to the control device 102 can impose restrictions on control actions that a distant user may carry out with respect to the controllable object 101. The local user can impose such restrictions by establishing a physical contact 106 between the local controller 103 and the control device 102. More precisely, a physical contact 106 allows local control data 118, which may define control restrictions, to be applied to the control device 102. It is preferable that there are no other ways for configuring the control device 102 than establishing a physical contact 106.

### FINAL REMARKS

The detailed description hereinbefore with reference to the drawings is merely an illustration of the invention and the additional features, which are defined in the claims. The invention can be implemented in numerous different ways. In order to illustrate this, some alternatives are briefly indicated.

The invention may be applied to advantage in numerous types of products or methods related to distant control of a device. For example, a distant control need not necessarily involve a communication network as illustrated in FIG. 1. Distant control may take place through dedicated transmission lines.

In general, there are numerous different ways of implementing the invention, whereby different implementations may have different topologies. In any given topology, a single module may carry out several functions, or several modules may jointly carry out a single function. In this respect, the drawings are very diagrammatic. For example, referring to FIG. 1, the controller module 110 and the model module 111 may form part of a single processing module. The same applies to other functional entities and modules that have been described.

There are numerous functions that may be implemented by means of hardware or software, or a combination of both. A description of a software-based implementation does not exclude a hardware-based implementation, and vice versa. Hybrid implementations, which comprise one or more dedicated circuits as well as one or more suitably programmed processors, are also possible. For example, various functions described hereinbefore with reference to the figures may be implemented by means of one or more dedicated circuits, whereby a particular circuit topology defines a particular function.

There are numerous ways of storing and distributing a set of instructions, that is, software, which allows distant control of a device in accordance with the invention. For example, software may be stored in a suitable device readable medium, such as, for example, a magnetic disk, an optical disk, or a memory circuit. A device readable medium in which software is stored may be supplied as an individual product or together with another product, which may execute the software. Such a medium may also be part of a product that enables software to be executed. Software may also be distributed via communication networks, which may be wired, wireless, or hybrid. For example, software may be distributed via the Internet. Software may be made available for download by means of a server. Downloading may be subject to a payment.

The remarks made hereinbefore demonstrate that the detailed description with reference to the drawings is an illustration of the invention rather than a limitation. The invention can be implemented in numerous alternative ways that are within the scope of the appended claims. All changes that come within the meaning and range of equivalency of the claims are to be embraced within their scope. Any reference sign in a claim should not be construed as limiting the claim. The word "comprising" does not exclude the presence of other elements or steps than those listed in a claim. The word "a" or "an" preceding an element or step does not exclude the presence of a plurality of such elements or steps. The mere fact that respective dependent claims define respective additional features, does not exclude combinations of additional features other than those reflected in the claims.

## Claims

1. A control device (102) comprising:
- a local control interface (108) adapted to receive local control data (118) from a local controller (103) upon establishment of a physical contact (106) between the control device and the local controller;
- a distant control interface (109) adapted to receive distant control data (115) from a distant controller (104) upon establishment of a communication link (107) between the control device and the distant controller;
- a control arrangement (110-112) adapted to define, on the basis of local control data, a transformation of distant control data into a physical control signal (120) for a controllable object (101).

2. A control device according to claim 1, wherein the control arrangement (110-112) comprises:
- a controller module (110) adapted to provide input control data (116) to a behavioral model of the controllable object (101) on the basis of the distant control data (115);
- a model module (111) adapted to implement the behavioral model of the controllable object (101), which provides state descriptive data (117) relating to the controllable object as a response to the input control data; and
- a physical control interface (112) adapted to transform the state descriptive data from the behavioral model into the physical control signal (120) for the controllable object.

3. A control device according to claim 2, wherein the physical control interface (112) is adapted to define, on the basis of local control data (118), a transformation of the state descriptive data (117) into the physical control signal (120) for the controllable object (101).

4. A control device according to claim 2, wherein the controller module (110) is adapted to define, on the basis of local control data (118), a transformation of the distant control data (115) into the input control data (116) for the behavioral model.

5. A control device according to claim 2, wherein the controller module (110) is adapted to verify whether the distant control data (115) is valid, or not.

6. A control device according to claim 5, wherein the controller module (110) is adapted to modify the distant control data (115) in case the distant control data is not valid, so as to obtain modified distant control data that is valid, and is further adapted to provide the input control data (116) for the behavioral model on the basis of the modified distant control data.

7. A control device according to claim 2, wherein the controller module (110) is adapted to provide, on the basis of the state descriptive data (117), view data describing a physical output of the controllable object (101), the distant control interface (109) being adapted to transmit the view data to the distant controller (104).

8. A control device according to claim 1, wherein the control arrangement (110-112) is adapted to use local control data (118) for imposing a range restriction on the physical control signal (120).

9. A control device according to claim 1, wherein the control arrangement (110-112) is adapted to use local control data (118) for modifying a rule according to which the physical control signal (120) varies with the distant control data (115).

10. A control device according to claim 1, wherein the control arrangement (110-112) to use local control data (118) for disabling a component of the physical control signal (120).

11. A control device according to claim 1, wherein the distant control interface (109) is adapted to communicate with the distant controller (104) over a communication network (105).

12. A method of controlling a controllable object (101) by means of a control device (102), the method comprising:
- a local control data reception step (301) in which the control device receives local control data (118) from a local controller (103) upon establishment of a physical contact (106) between the control device and the local controller;
- a distant control data reception step (201) in which the control device receives distant control data (115) from a distant controller (104) upon establishment of a communication link (107) between the control device and the distant controller;
- a control definition step in which the control device defines, on the basis of local control data, a transformation of distant control data into a physical control signal (120) for a controllable object (101); and
- a control execution step in which the control device applies the transformation to distant control data that has been received so as to generate the physical control signal.

13. A device readable medium comprising a set of instructions that enables a device, which is capable of executing the set of instructions, to carry out the method according to claim 12.

## Patentansprüche

1. Steuervorrichtung (102), umfassend:
- eine lokale Steuerschnittstelle (108), die angepasst ist zum Empfangen von lokalen Steuerdaten (118) von einem lokalen Controller (103) nach Aufbau eines physikalischen Kontakts (106) zwischen der Steuervorrichtung und dem lokalen Controller;
- eine entfernte Steuerschnittstelle (109), die ausgelegt ist zum Empfangen von entfernten Steuerdaten (115) von einem entfernten Controller (104) nach Aufbau einer Kommunikationsverbindung (107) zwischen der Steuervorrichtung und dem entfernten Controller;
- eine Steueranordnung (110-112), die ausgelegt ist zum Definieren, auf Grundlage von lokalen Steuerdaten, einer Transformation von entfernten Steuerdaten in ein physikalisches Steuersignal (120) für ein steuerbares Objekt (101).

2. Steuervorrichtung nach Anspruch 1, wobei die Steueranordnung (110-112) umfasst:
- ein Steuermodul (110), das ausgelegt ist zum Bereitstellen von Eingangssteuerdaten (116) für ein Verhaltensmodell des steuerbaren Objekts (101) auf Grundlage der entfernten Steuerdaten (115);
- ein Modellmodul (111), das ausgelegt ist zum Implementieren des Verhaltensmodells des steuerbaren Objekts (101), das zustandsbeschreibende Daten (117) bereitstellt in Bezug auf das steuerbare Objekt als Antwort auf die Eingangssteuerdaten; und
- eine physikalische Steuerschnittstelle (112), die ausgelegt ist zum Transformieren der zustandsbeschreibenden Daten vom Verhaltensmodell in das physikalische Steuersignal (120) für das steuerbare Objekt.

3. Steuervorrichtung nach Anspruch 2, wobei die physikalische Steuerschnittstelle (112) ausgelegt ist zum Definieren, auf Grundlage von lokalen Steuerdaten (118), einer Transformation der zustandsbeschreibenden Daten (117) in das physikalische Steuersignal (120) für das steuerbare Objekt (101).

4. Steuervorrichtung nach Anspruch 2, wobei das Steuermodul (110) ausgelegt ist zum Definieren, auf Grundlage von lokalen Steuerdaten (118), einer Transformation der entfernten Steuerdaten (115) in die Eingangssteuerdaten (116) für das Verhaltensmodell.

5. Steuervorrichtung nach Anspruch 2, wobei das Steuermodul (110) ausgelegt ist zum Verifizieren, ob die entfernten Steuerdaten (115) gültig sind oder nicht.

6. Steuervorrichtung nach Anspruch 5, wobei das Steuermodul (110) ausgelegt ist zum Modifizieren der entfernten Steuerdaten (115) im Falle, dass die entfernten Steuerdaten nicht gültig sind, sowie zum Erhalten modifizierter entfernter Steuerdaten, die gültig sind, und das weiterhin ausgelegt ist zum Bereitstellen der Eingangssteuerdaten (116) für das Verhaltensmodell auf Grundlage der modifizierten entfernten Steuerdaten.

7. Steuervorrichtung nach Anspruch 2, wobei das Steuermodul (110) ausgelegt ist zum Bereitstellen, auf Grundlage der zustandsbeschreibenden Daten (117), von Ansichtsdaten, die einen physikalischen Ausgang des steuerbaren Objekts (101) beschreiben, wobei die entfernte Steuerschnittstelle (109) ausgelegt ist zum Übertragen der Ansichtsdaten auf den entfernten Controller (104).

8. Steuervorrichtung nach Anspruch 1, wobei die Steueranordnung (110-112) ausgelegt ist zum Gebrauch der lokalen Steuerdaten (118) zum Auferlegen einer Bereichseinschränkung des physikalischen Steuersignals (120).

9. Steuervorrichtung nach Anspruch 1, wobei die Steueranordnung (110-112) ausgelegt ist zum Gebrauch lokaler Steuerdaten (118) zum Modifizieren einer Regel gemäß der das physikalische Steuersignal (120) mit den entfernten Steuerdaten (115) variiert.

10. Steuervorrichtung nach Anspruch 1, wobei die Steueranordnung (110-112) ausgelegt ist zum Gebrauch lokaler Steuerdaten (118) zum Deaktivieren einer Komponente des physikalischen Steuersignals (120).

11. Steuervorrichtung nach Anspruch 1, wobei die entfernte Steuerschnittstelle (109) ausgelegt ist zum Kommunizieren mit dem entfernten Controller (104) über ein Kommunikationsnetzwerk (105).

12. Verfahren zum Steuern eines steuerbaren Objekts (101) mittels einer Steuervorrichtung (102), wobei das Verfahren umfasst:
- einen lokalen Steuerdatenempfangsschritt (301), in dem die Steuervorrichtung lokale Steuerdaten (118) von einem lokalen Controller (103) nach Aufbau eines physikalischen Kontakts (106) zwischen der Steuervorrichtung und dem lokalen Controller empfängt;
- einen entfernten Steuerdatenempfangsschritt (201), in dem die Steuervorrichtung entfernte Steuerdaten (115) von einem entfernten Controller (104) nach Aufbau einer Kommunikationsverbindung (107) zwischen der Steuervorrichtung und dem entfernten Controller empfängt;
- einen Steuerdefinitionsschritt, in dem die Steuervorrichtung auf Grundlage lokaler Steuerdaten eine Transformation von entfernten Steuerdaten in ein physikalisches Steuersignal (120) für ein steuerbares Objekt (101) definiert; und
- einen Steuerausführungsschritt, in dem die Steuervorrichtung die Transformation auf entfernte Steuerdaten anwendet, die empfangen worden sind, sowie zum Erzeugen des physikalischen Steuersignals.

13. Vorrichtungslesbares Mittel, umfassend einen Satz von Befehlen, die der Vorrichtung ermöglichen, die fähig ist zum Ausführen des Satzes von Befehlen, das Verfahren nach Anspruch 12 durchzuführen.

## Revendications

1. Dispositif de commande (102) comprenant :
- une interface de commande locale (108) adaptée pour recevoir des données de commande locale (118) en provenance d'un organe de commande local (103) lors de l'établissement d'un contact physique (106) entre le dispositif de commande et l'organe de commande local ;
- une interface de commande à distance (109) adaptée pour recevoir des données de commande à distance (115) en provenance d'un organe de commande distant (104) lors de l'établissement d'une liaison de communication (107) entre le dispositif de commande et l'organe de commande distant ;
- un système de commande (110-112) adapté pour définir, sur la base de données de commande locale, une transformation des données de commande à distance en un signal de commande physique (120) pour un objet pouvant être commandé (101).

2. Dispositif de commande selon la revendication 1, dans lequel le système de commande (110-112) comprend :
- un module d'organe de commande (110) adapté pour fournir des données de commande d'entrée (116) à un modèle comportemental de l'objet pouvant être commandé (101) sur la base des données de commande à distance (115) ;
- un module de modèle (111) adapté pour mettre en oeuvre le modèle comportemental de l'objet pouvant être commandé (101), qui fournit des données de description d'état (117) relatives à l'objet pouvant être commandé en réponse aux données de commande d'entrée ; et
- une interface de commande physique (112) adaptée pour transformer les données de description d'état provenant du modèle comportemental en signal de commande physique (120) pour l'objet pouvant être commandé.

3. Dispositif de commande selon la revendication 2, dans lequel l'interface de commande physique (112) est adaptée pour définir, sur la base des données de commande locale (118), une transformation des données de description d'état (117) en signal de commande physique (120) pour l'objet pouvant être commandé (101).

4. Dispositif de commande selon la revendication 2, dans lequel le module d'organe de commande (110) est adapté pour définir, sur la base des données de commande locale (118), une transformation des données de commande à distance (115) en données de commande d'entrée (116) pour le modèle comportemental.

5. Dispositif de commande selon la revendication 2, dans lequel le module d'organe de commande (110) est adapté pour vérifier si les données de commande à distance (115) sont valides ou non.

6. Dispositif de commande selon la revendication 5, dans lequel le module d'organe de commande (110) est adapté pour modifier les données de commande à distance (115) dans le cas où les données de commande à distance ne sont pas valides, de façon à obtenir des données de commande à distance modifiées qui sont valides, et est en outre adapté pour fournir les données de commande d'entrée (116) pour le modèle comportemental sur la base des données de commande à distance modifiées.

7. Dispositif de commande selon la revendication 2, dans lequel le module d'organe de commande (110) est adapté pour fournir, sur la base des données de description d'état (117), des données de vue décrivant une sortie physique de l'objet pouvant être commandé (101), l'interface de commande à distance (109) étant adaptée pour transmettre les données de vue à l'organe de commande à distance (104).

8. Dispositif de commande selon la revendication 1, dans lequel le système de commande (110-112) est adapté pour utiliser des données de commande locale (118) pour imposer une restriction de plage au signal de commande physique (120).

9. Dispositif de commande selon la revendication 1, dans lequel le système de commande (110-112) est adapté pour utiliser des données de commande locale (118) pour modifier une règle selon laquelle le signal de commande physique (120) varie avec les données de commande à distance (115).

10. Dispositif de commande selon la revendication 1, dans lequel le système de commande (110-112) est adapté pour utiliser des données de commande locale (118) pour désactiver une composante du signal de commande physique (120).

11. Dispositif de commande selon la revendication 1, dans lequel l'interface de commande à distance (109) est adaptée pour communiquer avec l'organe de commande à distance (104) dans un réseau de communication (105).

12. Procédé de commande d'un objet pouvant être commandé (101) au moyen d'un dispositif de commande (102), le procédé comprenant :
- une étape de réception de données de commande locale (301) dans laquelle le dispositif de commande reçoit des données de commande locale (118) en provenance d'un organe de commande local (103) lors de l'établissement d'un contact physique (106) entre le dispositif de commande et l'organe de commande local ;
- une étape de réception de données de commande à distance (201) dans laquelle le dispositif de commande reçoit des données de commande à distance (115) en provenance d'un organe de commande à distance (104) lors de l'établissement d'une liaison de communication (107) entre le dispositif de commande et l'organe de commande à distance ;
- une étape de définition de commande dans laquelle le dispositif de commande définit, sur la base des données de commande locale, une transformation des données de commande à distance en un signal de commande physique (120) pour un objet pouvant être commandé (101) ; et
- une étape d'exécution de commande dans laquelle le dispositif de commande applique la transformation aux données de commande à distance qui ont été reçues de façon à générer le signal de commande physique.

13. Support lisible par un dispositif comprenant un ensemble d'instructions qui permettent à un dispositif, qui est capable d'exécuter l'ensemble d'instructions, de réaliser le procédé selon la revendication 12.
